Europäisches Patentamt

European Patent Office

Office européen des brevets

(11) Veröffentlichungsnummer: **0 320 710 B1**

(12) # EUROPÄISCHE PATENTSCHRIFT

(45) Veröffentlichungstag der Patentschrift: **22.09.93**

(51) Int. Cl.⁵: **G03B 27/80**

(21) Anmeldenummer: **88120112.3**

(22) Anmeldetag: **02.12.88**

(54) **Verfahren und Messvorrichtung zur Bestimmung der Belichtungszeit beim fotografischen Kopieren.**

(30) Priorität: **16.12.87 IT 485887**

(43) Veröffentlichungstag der Anmeldung:
**21.06.89 Patentblatt 89/25**

(45) Bekanntmachung des Hinweises auf die
Patenterteilung:
**22.09.93 Patentblatt 93/38**

(84) Benannte Vertragsstaaten:
**CH DE FR GB LI NL SE**

(56) Entgegenhaltungen:
**DE-A- 3 022 535**
**DE-A- 3 605 150**
**DE-C- 2 935 705**

(73) Patentinhaber: **Durst Phototechnik GmbH**
**Gerbergasse 58**
**I-39100 Bozen(IT)**

(72) Erfinder: **Vinatzer, Alex**
**Angerweg 19**
**I-39042 Brixen/Milland(IT)**

## Beschreibung

Die Erfindung betrifft ein Verfahren und eine Meßvorrichtung zur Bestimmung der Belichtungszeit beim fotografischen Kopieren mittels fotografischer Vergrößerungs- oder Kopiergeräte.

Zur Ermittlung der erforderlichen Belichtungszeit für eine gegebene Kopiervorlage wird in der Regel ein Lichtmeßgerät, auch Fotometer genannt, zu Hilfe genommen, mit welchem die Vorlage hinsichtlich ihrer Dichte ausgemessen wird, um daraus die Belichtungszeit nach der bekannten Beziehung

$$I \times t = K \qquad (1)$$

herzuleiten: dabei ist I die Intensität des die Kopiervorlage durchleuchtenden Kopierlichtes, t die Belichtungszeit d. h. die Dauer der Einwirkung der Lichtintensität I auf das Kopiermaterial und K eine Konstante, deren Wert in einer Kalibrierphase mit Bezug auf eine Testvorlage und das verwendete Kopiermaterial zu bestimmen ist.

Lichtmeßgeräte dieser Art umfassen im allgemeinen eine in der Kopierebene des Vergrößerungsgerätes positionierbare Meßsonde zum Erfassen der Lichtintensität in einem ausgewählten Bereich des projizierten Bildes und eine Signalauswertschaltung zum Umsetzen des Meßsignals in einen entsprechenden Wert der Belichtungszeit. Die so ermittelte Belichtungszeit wird auf einer Anzeigeeinrichtung angezeigt oder das entsprechende Zeitsignal wird direkt zur Steuerung der Belichtung im Vergrößerungsgerät herangezogen. Es sind auch Lichtmeßgeräte mit Speichermitteln zum zeitweiligen Speichern der Meßwerte bezüglich verschiedener Meßpunkte und mit Rechenmitteln zum Ausführen von Rechenoperationen anhand der gespeicherten Meßwerte wie die Bildung eines Mittelwertes oder die Bestimmung der Differenz zwischen den Extremwerten bekannt. Ein solches Lichtmeßgerät ist zum Beispiel im deutschen Patent DE-C 2935705 beschrieben, wo die Belichtungszeit anstatt aus einem Einzelwert aus dem Mittelwert von mehreren Messungen in verschiedenen Punkten des projizierten Bildes bestimmt werden kann.

Es gibt Anwendungsfälle, in denen vorgezogen wird, mit einer fixen, vorgegebenen Belichtungszeit zu belichten und die Belichtung anstatt über die Zeit über die Intensität des Lichtes zu steuern, beispielsweise mittels einer Blende. Auf die Belichtung mit konstanter Belichtungszeit (annähernd jene der Kalibrierbedingungen) wird zum Beispiel zurückgegriffen, um das Auftreten des bekannten Schwarzschildeffektes (Abweichung vom Reziprozitätsgesetz) zu vermeiden, aufgrund von welchem sich Anomalien in der Belichtung ergeben, wenn die Belichtungszeit innerhalb eines zu weiten Bereiches variiert. Desgleichen kann es, wenn das Lichtmeßgerät die Belichtung nicht direkt steuert, sondern die ermittelte Zeit erst auf die Steuereinrichtung übertragen werden muß, aus Gründen der einfacheren Bedienung und zur Verringerung von Fehlerrisiken von Vorteil sein, mit gleichbleibender Belichtungszeit zu arbeiten und die Blende entsprechend zu verstellen.

In den angeführten Fällen geht es also darum, einen mit Hilfe des Lichtmeßgerätes ermittelten Wert der Belichtungszeit in einen anderen, vorgegebenen Wert umzusetzen, indem die Lichtverhältnisse entsprechend verändert werden. Dies bringt keine Probleme mit sich, wenn die angezeigte Belichtungszeit das Ergebnis einer Einzelmessung in einem einzigen Punkt der Abbildung ist, weil dann eine direkte Beziehung zwischen der Veränderung der Lichtintensität und der angezeigten Belichtungszeit besteht. Die Umsetzung ist hingegen mit den bekannten Lichtmeßgeräten nicht mehr möglich, wenn die angezeigte Belichtungszeit das Ergebnis einer Mittelwertbildung aus der Messung einer Vielzahl von ausgewählten Punkten der Abbildung ist.

Der vorliegenden Erfindung liegt die Aufgabe zugrunde, ein Verfahren und eine Meßvorrichtung anzugeben, mit denen eine auf dem Ergebnis einer Mittelwertbildung aus Meßwerten einer Vielzahl von Meßpunkten basierende Belichtungszeit auf einfache Weise an Veränderungen der Lichtintensität, die nach der Mittelwertbildung erfolgen, angepaßt werden kann.

Das Verfahren und die Vorrichtung, die diese Aufgabe lösen, weisen die in den Patentansprüchen 1 und 4 angeführten Merkmale auf.

Nach dem erfindungsgemäßen Verfahren wird die auf dem Mittelwert der Messung der Vielzahl der ausgewählten Meßpunkte basierende Belichtungszeit kontinuierlich nach Maßgabe eines Proportionalitätsfaktors, der für den in Messung befindlichen Punkt das Verhältnis zwischen dem in die Mittelwertbildung eingehenden Augenblickswert und dem laufenden Meßwert im selben Meßpunkt ausdrückt, neu bewertet. Dadurch hängt die vom Lichtmeßgerät angegebene Belichtungszeit außer von den Meßwerten in den einzelnen Bildpunkten bei der Mittelwertbildung vom laufenden Wert in dem in Messung befindlichen Meßpunkt ab und die resultierende Zeit kann somit durch Beeinflussung der Lichtintensität auf einen vorgegebenen Wert zurückgeführt werden, ohne dadurch den der Bestimmung der Belichtungszeit zugrundeliegenden Mittelwert zu verändern.

EP 0 320 710 B1

So kann zum Beispiel eine ermittelte Belichtungszeit, wenn sie stark von der Kalibrierbelichtungszeit abweicht, so daß eine unbefriedigende Belichtung infolge des Schwarzschildeffektes befürchtet werden muß, durch Verstellen der Blende bei gleichzeitiger Beobachtung des laufend angezeigten Wertes auf einen gewünschten Wert zurückgeführt werden, wenn die Meßsonde während der Blendenverstellung auf dem zuletzt ausgewählten Meßpunkt verbleibt.

Um das volle Projektionsbild mit einer vernünftigen Anzahl einzelner Meßpunkte ausmessen zu können, kann es von Vorteil sein, in der Meßphase einen reduzierten Vergrößerungsmaßstab zu wählen, der verschieden von jenem der eigentlichen Kopie ist. In diesem Fall geht es darum, die in bezug auf einen bestimmten Vergrößerungsmaßstab ermittelte Belichtungszeit in die entsprechende Belichtungszeit bezüglich eines anderen Vergrößerungsmaßstabes umzusetzen. Verbleibt nun die Meßsonde auf dem für die Mittelwertbildung zuletzt gewählten Meßpunkt, liefert die erfindungsgemäße Vorrichtung bei Änderung des Vergrößerungsmaßstabes für jeden neu eingestellten Maßstab die korrekte Belichtungszeit unter Wahrung der dem Mittelwert zugrundeliegenden Verteilung der Lichtmeßwerte.

Vorteilhafterweise wird die Mittelwertbildung und anschließende Berechnung der mittleren Belichtungszeit bei der Messung jedes einzelnen Punktes der Meßpunktreihe durchgeführt, so daß die Bedienungsperson jederzeit über die Anzahl der Meßpunkte entscheiden kann.

Weitere Merkmale und Vorteile des erfindungsgemäßen Verfahrens und der Vorrichtung zu dessen Durchführung ergeben sich aus den abhängigen Patentansprüchen in Verbindung mit der Beschreibung eines bevorzugten Ausführungsbeispiels, das im folgenden anhand der beigefügten Zeichnungen erläutert wird. Die Zeichnungen zeigen:

Figur 1 -    Eine Gesamtansicht der Meßvorrichtung gemäß der Erfindung;

Figur 2 -    ein Blockschaltbild zur Erläuterung des Funktionsprinzips der Meßvorrichtung gemäß der Erfindung;

Figur 3 -    die Meßvorrichtung in Verbindung mit einem Zeitschaltgerät (timer).

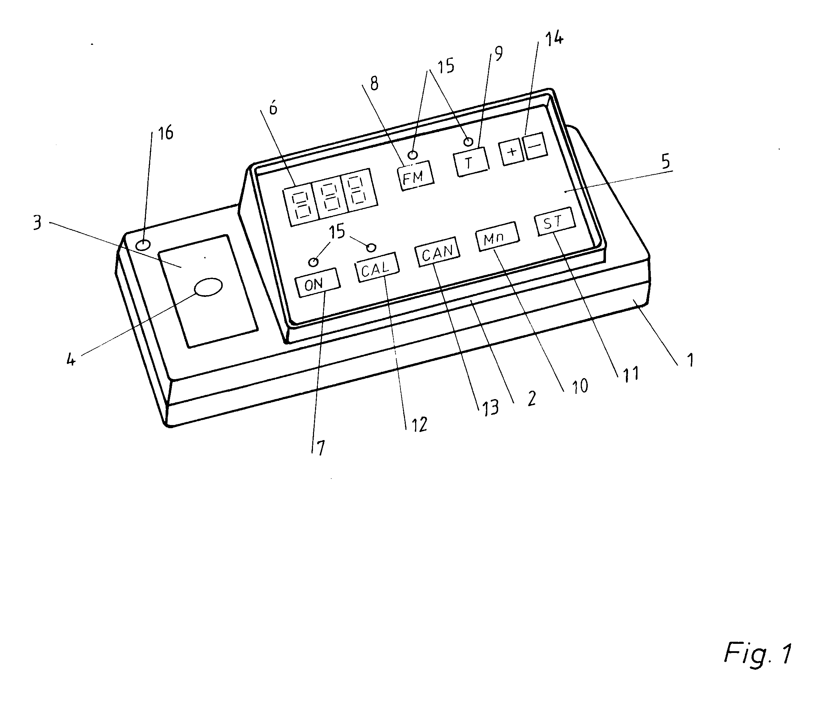

Die Meßvorrichtung in der in Fig. 1 gezeigten bevorzugten Ausführung weist ein flaches Gehäuse 1 auf, das die hauptsächlichen Bauteile der Meß- und Signalauswertschaltung enthält. Eine obere Deckfläche 2 des Gehäuses weist ein Lichteinfallfeld 3 mit einer Lichtöffnung 4 auf, im Bereich welcher im Inneren des Gehäuses ein fotoelektrischer Wandler (in der Figur nicht sichtbar) angeordnet ist. Seitlich des Lichteinfallfeldes 3 befindet sich auf der Deckfläche 2 ein Anzeige- und Bedienungsfeld 5 mit einer Leuchtziffernanzeige 6, einer Ein- Ausschalttaste 7, Betriebsartwahltasten 8 und 9, einer Speichertaste 10, einer Start-Taste 11 und weiteren Befehleingabetasten 12-14, deren Funktion aus der noch folgenden Beschreibung der Meßvorrichtung deutlich wird. Anzeigelampen 15 in Zuordnung zu den einzelnen Tasten zeigen deren Schaltzustand an.

Das Gehäuse ist im übrigen so bemessen, daß es in der Projektionsebene eines Vergrößerungsgerätes frei positionierbar ist, so daß das Licht eines ausgewählten Punktes der projizierten Abbildung durch die Öffnung 4 hindurch auf den fotoelektrischen Wandler fällt. Das Ganze bildet eine kompakte Meßeinheit, die zur Handhabung als Meßsonde in der Projektionsebene des Vergrößerungsgerätes geeignet ist.

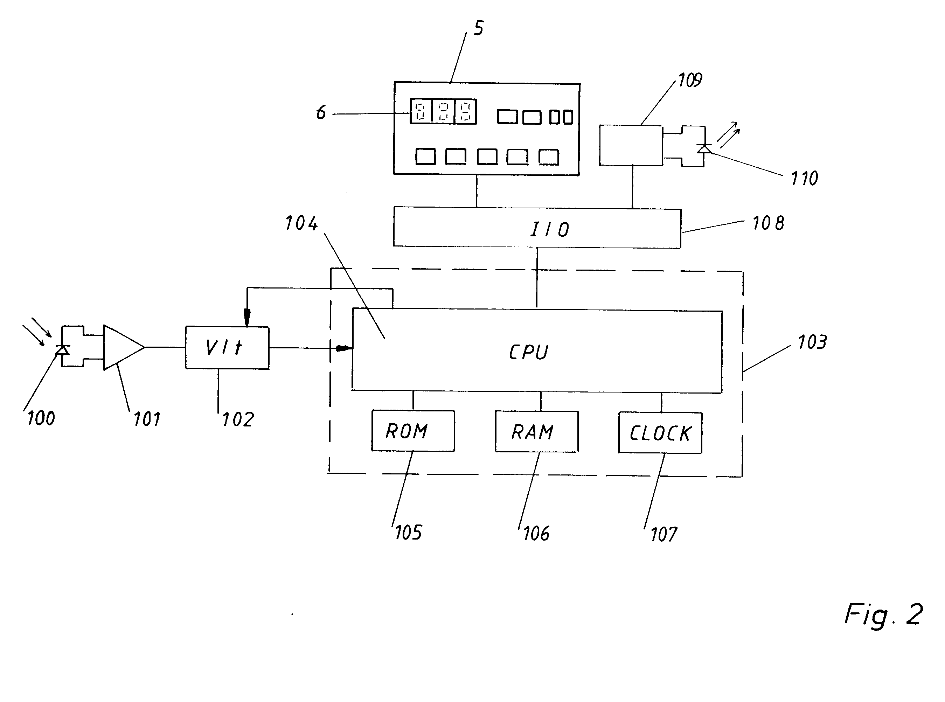

Gemäß dem Blockschaltbild der Figur 2 weist die Meßschaltung der erfindungsgemäßen Vorrichtung einen fotoelektrischen Wandler, vorzugsweise eine Fotodiode 100 auf, deren lichtempfindliche Oberfläche hinter der Öffnung 4 des Lichteinfallfeldes 3 des Gehäuses 1 angeordnet ist. Die Fotodiode ist an den Eingang eines Signalverstärkers 101, der als Strom/Spannungs-Wandler geschaltet ist, angeschlossen, so daß an dessen Ausgang eine dem Fotostrom der Diode und somit der Intensität des Meßlichtes proportionale Spannung entsteht. Der Ausgang des Verstärkers 101 ist mit einem Spannung/Zeit-Wandler 102 verbunden und das Ausgangssignal des letzteren ist schließlich einem Mikroprozessorsystem 103 zur weiteren Verarbeitung zugeführt. Das Mikroprozessorsystem umfaßt einen zentralen Mikroprozessor (CPU) 104 mit den periphären Elementen wie Programmspeicher (ROM) 105, Datenspeicher (RAM) 106, Taktgeber (CLOCK) 107 und einen Eingabe/Ausgabeport (I/O) 108. An den Mikroprozessor 104, der auch das Triggersignal für den Spannung/Zeit-Wandler liefert, sind außerdem über den Eingabe/Ausgabeport 108 das Bedienungsfeld 5 (vgl. Fig. 1) sowie ein Zeitschaltkreis 109, dessen Funktion noch beschrieben wird, angeschlossen.

Das Mikroprozessorsystem ist zur Berechnung der Belichtungszeit aufgrund der von der Fotodiode aufgenommenen Lichtintensität programmiert. Im Falle der Bestimmung der Belichtungszeit aufgrund der Messung eines Einzelpunktes der Abbildung wird diese vom Mikroprozessorsystem nach der eingangs angeführten Beziehung (1) errechnet, die in logarithmischer Ausdrucksform zu

$$t = 10^{K - \log I} \qquad (2)$$

wird, wobei I der Wert der aufgenommenen Lichtintensität, ausgedrückt in Funktion der vom Spannung/Zeit-

3

EP 0 320 710 B1

Wandler 102 angegebenen Zeit $t_I$ und K eine in der Kalibrierphase zu bestimmende Konstante ist.

Im Falle hingegen, daß die Belichtungszeit aufgrund einer Vielzahl von Messungen in verschiedenen Punkten des zu belichtenden Bildes bestimmt werden soll, ist der Rechner so vorbereitet, daß er zunächst das geometrische Mittel $I_M$ der Lichtmeßwerte $I_{1o}$, $I_{2o}$, .... $I_{no}$ nach der Beziehung

$$\log I_M = \frac{\log I_{1o} + \log I_{2o} + \ldots \log I_{no}}{n} \qquad (3)$$

und in der Folge die mittlere Belichtungszeit $t_m$ nach der Beziehung

$$t_m = 10^K + C_n - \log I_M \qquad (4)$$

berechnet, wobei K die in der Kalibrierphase zu bestimmende Konstante ist und $C_n$ eine logarithmische Größe, die das Verhältnis zwischen dem augenblicklichen Lichtmeßwert $I_{no}$,der in die Mittelwertbildung eingeht und dem laufenden Meßwert $I_n$ im selben Meßpunkt ausdrückt.

Bei Berücksichtigung der Definition der Größe $C_n$ ergibt sich aus (4) unschwer, daß die resultierende, auf der Anzeigevorrichtung angezeigte Belichtungszeit über $C_n$ umgekehrt proportional vom laufenden Meßwert des letzten Punktes der gewählten Meßpunktreihe abhängt und daß somit eine Änderung der Lichtintensität in diesem Punkt gegenüber dem Wert $I_{no}$ zum Zeitpunkt der Mittelwertbildung aus den Werten $I_{1o}$ , $I_{2o}$, ... $I_{no}$ eine entsprechende Änderung der angezeigten Belichtungszeit zur Folge hat. Mit anderen Worten, eine Änderung der Lichtintensität, die nach der Mittelwertbildung eintritt, wird aufgrund der laufenden Messung eines einzigen und zwar des letzten Punktes der Meßpunktreihe in die entsprechende Änderung der angezeigten mittleren Belichtungszeit umgesetzt.

Die mittlere Belichtungszeit gemäß (4) wird nach der Messung jedes einzelnen Punktes in bezug auf diesen und die vorhergehenden Meßpunkte berechnet und angezeigt. Um die Berechnung des Mittelwertes gemäß (3) nach Hinzukommen eines neuen Meßpunktes zu den bereits berücksichtigten zu erleichtern, wird die Summe $S_n = \log I_{1o} + \log I_{2o} + \ldots\ldots + \log I_{no}$ gemäß (3) abgespeichert und wird ein systeminterner Zähler der Meßpunktanzahl n bei der Messung eines jeden weiteren Punktes um eine Einheit inkrementiert. Diese Vorgangsweise erlaubt es, die Anzahl der Meßpunkte beliebig auszudehnen, ohne die Anzahl selbst im vorhinein festlegen zu müssen.

Zum Ausmessen einer Kopiervorlage zum Zwecke der Bestimmung der Belichtungszeit wird in der Praxis zunächst die Meßvorrichtung durch Drücken der entsprechenden Funktionstaste 8 (FM) auf die Funktionsart "Fotometer" eingestellt und die Meßsonde in der Projektionsebene des Vergrößerungsgerätes in einem ausgewählten Bereich des projizierten Bildes so positioniert, daß dessen Meßlicht auf die Fotodiode 100 einfällt. Das Mikroprozessorsystem berechnet dann aufgrund der ermittelten Lichtintensität die Belichtungszeit nach der oben angegebenen Beziehung (2) und zeigt die so erhaltene Zeit auf der Anzeigevorrichtung 6 an. Dabei wird davon ausgegangen, daß der Wert der Konstanten K bereits aus einer anfänglichen Kalibrierung bekannt und im Speicher gespeichert ist. Der gespeicherte Wert von K kann durch Betätigen der dafür vorgesehenen Taste 12 (CAL) auf der Anzeigevorrichtung sichtbar gemacht und durch Drücken der einen oder der anderen Taste eines Tastenpaares 14 ( +/-) erhöht oder verringert werden. Vorteilhafterweise ist die Vorrichtung so ausgelegt, daß mehrere Werte von K, die je einer Kalibrierbedingung mit Bezug auf eine spezifische Testvorlage und/oder den verwendeten Kopiermaterialtyp zugeordnet sind, in gesonderten Speicherkanälen gespeichert werden können. Die einzelnen, beispielsweise durch progressive Numerierung gekennzeichneten Speicherkanäle sind mittels der dafür vorgesehenen Taste 13 (CAN) in Verbindung mit dem Tastenpaar 14 ( +/-) abrufbar, wobei bei Drücken der Taste 13 zunächst die Nummer des wirksamen Kanals auf der Anzeigevorrichtung 6 aufscheint und davon ausgehend der gewünschte Kanal durch Betätigen des Tastenpaares 14 angewählt wird.

Soll hingegen eine mittlere Belichtungszeit in bezug auf mehrere Meßpunkte der Kopiervorlage bestimmt werden, so wird die Meßsonde nacheinander in die ausgewählten Stellungen gebracht und bei jeder Messung die Speichertaste 10($M_n$) auf dem Bedienungsfeld 5 betätigt.

Beim Betätigen der Speichertaste 10 errechnet das Mikroprozessorsystem das geometrische Mittel $I_M$ der bis dahin erfaßten Lichtmeßwerte und daraus die mittlere Belichtungszeit gemäß den obigen Beziehungen (3) und (4). Hierzu wird - ausgelöst durch die Betätigung der Speichertaste 10 - der augenblickliche Meßwert $I_{no}$ des in Messung befindlichen Punktes anstelle des früher gespeicherten, auf den vorhergehenden Meßpunkt bezogenen Meßwertes in den Speicher eingeschrieben und der Zählerstand des Meßpunktzählers um eine Einheit inkrementiert. In Voraussicht einer Ausweitung der Mittelung auf weitere Meßpunkte

4

wird auch der neue Wert der Summe $S_n = \log I_{1o} + \log I_{2o} + \ldots \log I_{no}$ eingespeichert. Mit Betätigung der Speichertaste 10 in dem ausgewählten Meßpunkt wird also der augenblickliche Meßwert in diesem Punkt in die Reihe der Meßwerte, über welche die Mittelung erfolgt, aufgenommen und derselbe Wert, einmal gespeichert, wird zum Bezugswert für Lichtänderungen, die in der Folge im selben Punkt wahrgenommen werden.

Es versteht sich, daß der Verhältniswert $I_{no}/I_n$ zwischen dem gespeicherten Wert $I_{no}$ und dem laufenden Meßwert $I_n$ gleich eins und die entsprechende logarithmische Größe $C_n$ derBeziehung (4) gleich Null ist, solange im Meßpunkt keine Änderung der Lichtintensität gegenüber den Lichtbedingungen im Augenblick der durch die Speichertaste ausgelösten Meßwertspeicherung entstehen. Eine Änderung der Lichtintensität beispielsweise als Folge einer Blendenverstellung oder der Einstellung eines anderen Vergrößerungsverhältnisses führt hingegen über $C_n$ der Beziehung (4) zu einer entsprechenden Änderung der resultierenden Belichtungszeit. Ist die Messung abgeschlossen, wird die ermittelte Belichtungszeit, wie sie auf der Anzeigevorrichtung aufscheint, auf die Belichtungssteuerung des Vergrößerungsgerätes übertragen, so daß bei der Belichtung das Projektionslicht für die angegebene Zeitdauer eingeschaltet wird.

Vorzugsweise umfaßt die erfindungsgemäße Meßvorrichtung selbst eine Zeitschalteinrichtung (timer). Beim Umschalten auf Timerbetrieb nach der Messung der Belichtungszeit durch Betätigen einer dafür vorgesehenen Taste 9 (T) der Betriebsartwahltasten des Schaltfeldes 5 bleibt die in der Messung ermittelte und angezeigte Zeit gespeichert. Auf ein mittels der Starttaste 11 (ST) augelöstes Startsignal läuft die Zeit vom anfänglichen vollen Wert bis Null ab. Während dieser Rückwärtszählung und für die exakte Dauer derselben steht an einem Ausgang der Meßvorrichtung ein Steuersignal an, das die Einschaltzeit des Projektionslichtes des Vergrößerungsgerätes bestimmt. Im Timerbetrieb ist die angezeigte Zeit mit Hilfe des Tastenpaares 14 ( + /-) in beiden Richtungen veränderbar.

In der beschriebenen Ausführungsform wird das Zeitsteuersignal von einem Infrarotstrahler 110, vorzugsweise einer Fotodiode abgegeben, die hinter einer Öffnung 16 der Deckfläche des Gehäuses 1 (Fig. 1) angeordnet ist und vom Mikroprozessorsystem gesteuert wird.

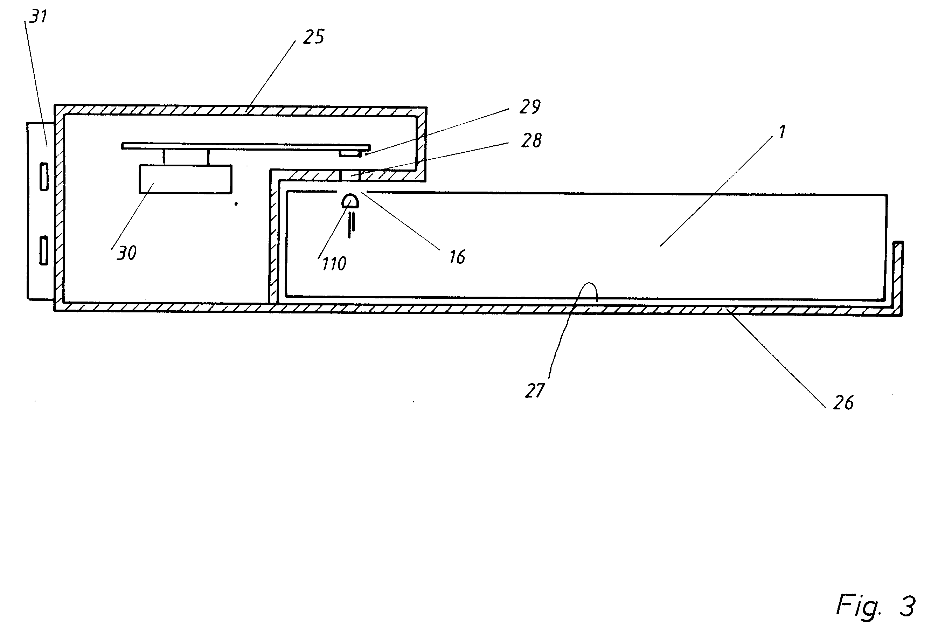

In Figur 3 ist die oben beschriebene Meßsonde schematisch in Verbindung mit einem Schaltmodul 25 in der Funktion des Zeitschalters dargestellt. Das Gehäuse des Schaltmoduls weist eine seitliche Verlängerung 26 auf, die eine Aufnahme 27 für das Meßsondengehäuse 1 bildet. Form und Abmessung des Schaltmoduls sind im übrigen so, daß bei in die Aufnahme 27 eingelegter Meßsonde der Infrarotstrahler 110 über die Öffnung 16 der Sonde und eine entsprechende Öffnung 28 des Schaltmoduls auf einen Infrarotsensor 29 im Inneren des Schaltmoduls ausgerichtet ist. Der Sensor 29 steuert über eine an sich bekannte Steuerschaltung ein Schaltelement, beispielsweise ein elektromechanisches Relais 30, das die Stromzufuhr für eine Steckdose 31, mit welcher das Versorgungskabel des Vergrößerungsgerätes verbindbar ist, ein- bzw. abschaltet, so daß das Vergrößerungsgerät selbst in Abhängigkeit des vom Infrarotstrahler 110 der Meßvorrichtung in Timerfunktion abgegebenen Signals ein- bzw. ausgeschaltet wird.

Die Meßsonde ist vorteilhafterweise mit einer unabhängigen Stromversorgung versehen, beispielsweise batteriebetrieben. Das Fehlen elektrischer Zuleitungen macht sie besonders mobil. Dank der Koppelung mittels Infrarotstrahlen wird die Kombination Fotometer/Timer durch einfache Ablage der Sonde in die Aufnahme des Schaltmoduls zum Belichtungsschaltgerät.

## Patentansprüche

1. Verfahren zur Bestimmung der Belichtungszeit beim fotografischen Kopieren mittels eines fotografischen Vergrößerungs- oder Kopiergerätes mit veränderbarer Kopierlichtintensität, basierend auf einer Mittelwertbildung der Lichtmeßwerte einer Anzahl unterschiedlicher Meßpunkte der projizierten Abbildung der Kopiervorlage, umfassend folgende Verfahrensschritte:
   - Messen der Lichtintensität nacheinander in einer Anzahl unterschiedlicher Meßpunkte bei gegebener Kopierlichtintensität und Speichern des Lichtmeßwertes ($I_{no}$) im jeweils letzten Meßpunkt;
   - Mittelwertbildung über die Anzahl der Lichtmeßwerte ($I_{no}$) der gemessenen Meßpunkte und Berechnung der Belichtungszeit aufgrund des Mittelwertes ($I_M$);
   gekennzeichnet durch die weiteren Verfahrensschritte:
   - laufende Messung der Lichtintensität im zuletzt gemessenen Meßpunkt unter Veränderung der Kopierlichtintensität und Berechnung eines Proportionalitätsfaktors als Verhältnis zwischen dem in die Mittelwertbildung eingegangenen, gespeicherten Lichtmeßwert ($I_{no}$) und einem infolge Lichtänderung laufend gemessenen Lichtmeßwert ($I_n$) und
   - laufende Anpassung der aufgrund des Mittelwertes ($I_M$) errechneten Belichtungszeit entsprechend dem Proportionalitätsfaktor und Anzeigen der entsprechend diesem Faktor veränderten Belichtungszeit.

**2.** Verfahren nach Anspruch 1, dadurch gekennzeichnet, daß bei jeder Einzelmessung der Mittelwert ($I_M$) der Lichtmeßwerte des in Messung befindlichen Meßpunktes und der vorhergegangenen Meßpunkte gebildet wird.

**3.** Verfahren nach Anspruch 2, dadurch gekennzeichnet, daß im Hinblick auf die Ausdehnung der Mittelwertbildung auf eine im vorhinein unbestimmte Anzahl Meßpunkte bei jeder Einzelmessung der Summenwert ($S_n$) der in die Mittelwertbildung eingehenden Einzellichtmeßwerte (log $I_{1o}$, log $I_{2o}$ ...... log $I_{no}$) gespeichert wird.

**4.** Meßvorrichtung zur Bestimmung der Belichtungszeit beim Kopieren einer Bildvorlage mittels eines fotografischen Vergrößerungs- oder Kopiergerätes zur Durchführung des Verfahrens nach Anspruch 1, mit einer in der Projektionsebene des Vergrößerungsgerätes positionierbaren Meßsonde zum Aufnehmen von Lichtmeßwerten in einer Anzahl unterschiedlicher Meßpunkte und einem Mikroprozessorsystem (103) zur Berechnung der Belichtungszeit aufgrund eines Mittelwertes der Lichtmeßwerte der Anzahl ausgewählter Meßpunkte, wobei Speichermittel (106) zum Speichern der in die Mittelwertbildung eingehenden Lichtmeßwerte vorgesehen sind, dadurch gekennzeichnet, daß das Mikroprozessorsystem (103) dazu ausgebildet ist, das Verhältnis zwischen einem gespeicherten, in die Mittelwertbildung eingegangenen Lichtmeßwert ($I_{no}$) eines ausgewählten Meßpunktes und einem laufenden, im selben Meßpunkt nach der Mittelwertbildung gemessenen Lichtmeßwert ($I_n$) zu berechnen und die aufgrund des Mittelwertes ($I_M$) errechnete Belichtungszeit nach Maßgabe dieses Verhältniswertes zu korrigieren und daß weiters Anzeigemittel (6) zum Anzeigen der korrigierten Belichtungszeit vorgesehen sind.

**5.** Meßvorrichtung nach Anspruch 4, dadurch gekennzeichnet, daß das Mikroprozessorsystem (103) dazu vorbereitet ist, den Summenwert ($S_n$) der in die Mittelwertbildung nacheinander eingehenden logarithmischen Einzellichtmeßwerte zu speichern.

**6.** Meßvorrichtung nach einem der vorhergehenden Ansprüche 4 oder 5, dadurch gekennzeichnet, daß das Mikroprozessorsystem (103) ein der ermittelten oder einer manuell eingegebenen Belichtungszeit entsprechendes Zeitsteuersignal liefert.

**7.** Meßvorrichtung nach Anspruch 6, dadurch gekennzeichnet, daß das Zeitsteuersignal in Form einer Infrarotstrahlung geliefert wird.

**Claims**

**1.** A method for determining the exposure time in photographic copying by means of a photographic enlarging or copying apparatus in which the intensity of the copying light is adjustable, based on formation of a mean value of the light measurement values of a number of different measurement points of the projected image of the copying original, comprising the following steps:
- measurement of the light intensity in succession at a number of different measurement points at a given intensity of copying light and with the light measurement value ($I_{no}$) at the last measurement point in each case being stored in memory;
- formation of the mean value by way of the number of light measurement values ($I_{no}$) of the measured measurement points and calculation of the exposure time on the basis of the mean value ($I_M$);
characterized by the further steps:
- continuous measurement of the light intensity at the measurement point measured last as the intensity of the copying light is changed, and calculation of a proportionality factor as the relationship between the stored light measurement value ($I_{no}$) entered in the formation of the mean value and a light measurement value ($I_n$) measured continuously as a result of change in the light and
- continuous matching of the exposure time calculated on the basis of the mean value ($I_M$) in accordance with the proportionality factor and indication of the exposure time changed in accordance with this factor.

**2.** A method according to claim 1, characterized in that, on each individual measurement, the mean value ($I_M$) of the light measurement values of the measurement point undergoing measurement and the preceding measurement points is formed.

3. A method according to claim 2, characterized in that, with regard to extending the formation of the mean value to a number of measurement points not determined in advance, on each individual measurement the total value ($S_n$) of the individual light measurement values (log $I_{1o}$, log $I_{2o}$ ....log $I_{no}$) being incorporated in the formation of the mean value is stored in memory.

4. A measuring apparatus for determining the exposure time during copying of an original by means of a photographic enlarging or copying apparatus for implementing the method according to Claim 1, having a measuring probe, which can be positioned in the plane of projection of the enlarging apparatus, for recording the light measurement values at number of different measurement points and a microprocessor system (103) for calculating the exposure time based on a mean value of the light measurement values of the number of selected measurement points, wherein storage means (106) for storing the light measurement values being incorporated in the mean value formation are provided, characterized in that the microprocessor system (103) is designed to calculate the relationship between a stored light measurement value ($I_{no}$), which has been incorporated in the mean value formation, of a selected measurement point and a running light measurement value ($I_n$) measured at the same measurement point after the formation of the mean value, and to correct the exposure time calculated on the basis of the mean value ($I_M$) in accordance with this relationship value, and furthermore indicating means (6) for indicating the corrected exposure time are provided.

5. A measuring apparatus according to claim 4, characterized in that the microprocessor system (103) is programmed to store the total value ($S_n$) of the logarithmic individual light measurement values being incorporated successively into the mean value formation.

6. A measuring apparatus according to one of the preceding claims 4 or 5, characterized in that the microprocessor system (103) provides a time control signal corresponding to the computed exposure time or a manually entered exposure time.

7. A measuring apparatus according to claim 6, characterized in that the time control signal is supplied in the form of infrared radiation.

**Revendications**

1. Procédé pour la détermination du temps d'exposition lors de la copie photographique au moyen d'un agrandisseur ou d'un appareil de copie photographique avec une intensité modifiable de la lumière de copie, sur la base d'une formation de moyenne des valeurs de mesure de la lumière d'un certain nombre de points de mesure différents de l'image projetée de l'exemplaire à copier, comprenant les étapes de procédé suivantes :
   - la mesure successive de l'intensité lumineuse en un certain nombre de points de mesure différents avec une intensité de lumière de copie donnée et l'enregistrement de la valeur de mesure de la lumière ($I_{no}$) au dernier point de mesure ;
   - la formation de la moyenne sur le nombre de valeurs de mesure de la lumière ($I_{no}$) des points de mesure mesurés et le calcul du temps d'exposition sur la base de la moyenne ($I_M$) ;
   caractérisé en ce qu'il comporte les étapes de procédé suivantes :
   - la mesure continue de l'intensité lumineuse au dernier point de mesure mesuré avec modification de l'intensité de la lumière de copie et le calcul d'un facteur de proportionnalité sous la forme d'un rapport entre la valeur de mesure de la lumière ($I_{no}$) entrant dans la formation de la moyenne et enregistrée et une valeur de mesure de la lumière ($I_n$) mesurée à la suite d'une modification de la lumière et
   - l'adaptation continue du temps d'exposition calculé sur la base de la moyenne ($I_M$) en fonction du facteur de proportionnalité et l'affichage du temps d'exposition modifié en fonction de ce facteur.

2. Procédé selon la revendication 1, caractérisé en ce que lors de chaque mesure individuelle, la moyenne ($I_M$) des valeurs de mesure de la lumière du point de mesure en cours de mesure et des points de mesure précédents est formée.

7

**3.** Procédé selon la revendication 2, caractérisé en ce qu'en vue de l'extension de la formation de la moyenne à un nombre indéterminé jusqu'alors de points de mesure la somme ($S_n$) des valeurs de mesure de la lumière (log $I_{10}$, log $I_{20}$... log $I_{no}$) entrant dans la formation de la moyenne est enregistrée lors de chaque mesure individuelle.

**4.** Dispositif de mesure pour la détermination du temps d'exposition lors de la copie d'un exemplaire à copier au moyen d'un agrandisseur ou d'un appareil de copie photographique pour la mise en oeuvre du procédé selon la revendication 1, avec une sonde de mesure pouvant être positionnée dans le plan de projection de l'agrandisseur pour la détection des valeurs de mesure de la lumière dans un certain nombre de points de mesure différents et un système de microprocesseur (103) pour le calcul du temps d'exposition sur la base d'une moyenne des valeurs de mesure de la lumière du nombre de points de mesure choisis, dans lequel des moyens d'enregistrement (106) sont prévus pour l'enregistrement des valeurs de mesure de la lumière entrant dans la formation de la moyenne, caractérisé en ce que le système de microprocesseur (103) est conçu pour calculer le rapport entre une valeur de mesure de la lumière ($I_{no}$) d'un point de mesure choisi enregistrée et entrant dans la formation de la moyenne et une valeur de mesure de la lumière ($I_n$) en cours mesurée au même point de mesure après la formation de la moyenne et pour corriger le temps d'exposition calculé sur la base de la moyenne ($I_M$) en fonction de cette valeur de rapport et en ce que des moyens d'affichage (6) sont en outre prévus par l'affichage du temps d'exposition corrigé.

**5.** Dispositif de mesure selon la revendication 4, caractérisé en ce que le système de microprocesseur (103) est préparé de façon à enregistrer la somme ($S_n$) des différentes valeurs de mesure de la lumière logarithmiques entrant successivement dans la formation de la moyenne.

**6.** Dispositif de mesure selon l'une ou l'ensemble des revendications 4 ou 5 précédentes, caractérisé en ce que le système de microprocesseur (103) délivre un signal de temporisation correspondant au temps d'exposition déterminé ou à un temps d'exposition entré manuellement.

**7.** Dispositif de mesure selon la revendication 6, caractérisé en ce que le signal de temporisation est délivré sous la forme d'un rayonnement infrarouge.

Fig. 1

Fig. 2

Fig. 3

EP 0 320 710 B1